# EUROPÄISCHE PATENTANMELDUNG

(11) **EP 1 767 793 A2**
(43) Veröffentlichungstag der Anmeldung: **28.03.2007**
(21) Anmeldenummer: 06120779.1
(22) Anmeldetag: 15.09.2006
(51) Int. Cl.: F16B 5/06, F16B 5/02

(54) **Befestigungsvorrichtung für die Befestigung von Solarpaneelen an einer Montageschiene**

(30) Priorität: 23.09.2005 DE 102005000129
(71) Anmelder: HILTI Aktiengesellschaft, 9494 Schaan (LI)
(72) Erfinder: Hoffmann, Armin, 86899, Landsberg (DE); Rubio, Daniel, 6800, Feldkirch (AT)
(74) Vertreter: Wildi, Roland

(57) **Zusammenfassung**

Die Erfindung betrifft eine Befestigungsvorrichtung (11) für die Befestigung von Solarpaneelen (1) an einer Montageschiene (2), die eine von Rändern (4) begrenzte Montageöffnung (3) aufweist. Die Befestigungsvorrichtung (11) umfasst ein Niederhalteelement (12), ein Mutterelement (21) und eine Befestigungsschraube (22), die ein Angriffsmittel (23) sowie einen davon abragenden Schraubenschaft (24) aufweist und durch deren Längserstreckung eine Längsachse (26) der Befestigungsvorrichtung (11) verläuft. Weiter ist ein Verbindungselement (31) vorgesehen, das einen Verbindungsabschnitt (32) und zwei davon abragende federelastische Abschnitte (33) aufweist, die parallel zu der Längsachse (26) der Befestigungsvorrichtung (11) verlaufen. Die federelastischen Abschnitte (33) weisen in ihren freien Endbereichen einen Halteabschnitt (34) und einen zu dem Halteabschnitt (34) in Richtung des Verbindungsabschnitts (32) beabstandeten Vorsprung (35) zur Ausbildung eines ersten Aufnahmeraums (37) für die Aufnahme der, die Montageöffnung (3) begrenzenden Ränder (4) auf.

## Beschreibung

### Technisches Gebiet

Die Erfindung betrifft eine Befestigungsvorrichtung für die Befestigung von Solarpaneelen an einer Montageschiene, der im Oberbegriff des Patentanspruchs 1 genannten Art.

### Stand der Technik

Um Solaranlagen auf Dachflächen, insbesondere nachträglich zu installieren, werden Tragsysteme aus jeweils eine Montageöffnung aufweisenden Montageschienen vorgesehen, welche die einzelnen Solarpaneelen in einem Abstand zu der Dachbedeckung, wie Dachziegeln, aufnehmen. Mittels einzelner Befestigungsvorrichtungen sind die einzelnen Solarpaneelen gegen Wind- und Schneelasten fixiert.

Aus der DE 296 16 947 U1 ist ein Befestigungssystem für Solarpaneelen bekannt, bei dem eine Montageschiene als eine von Rändern begrenzte Montageöffnung eine längs verlaufende Nut aufweist, in welche ein Mutterelement mit einem Innengewinde seitlich eingeschoben werden muss. Mittels eines Niederhalteelementes und Verspannen einer durch dieses hindurchgeführten Befestigungsschraube, die ein Angriffsmittel sowie einen davon abragenden Schraubenschaft aufweist und die in das Innengewinde im Mutterelement eingreift, wird das Solarpaneel an der Montageschiene festgelegt. Durch die Längserstreckung der Befestigungsschraube verläuft die Längsachse der Befestigungsvorrichtung.

Nachteilig an der bekannten Lösung ist, dass das Einführen des Mutterelementes in die längsverlaufende Nut, insbesondere bei langen Montageschienen, und die Positionierung des Mutterelementes für den Eingriff der Befestigungsschraube aufgrund der Vielzahl einzelner, loser Teile umständlich ist.

Aus der DE 197 52 714 C2 ist eine Befestigungsanordnung für die Anbringung eines Bauteils an einer C-förmigen Montageschiene bekannt, die ein Hintergreifteil, das in eine Montageöffnung einführbar und zum Hintergreifen der freien Ränder der Montageöffnung verdrehbar ist, eine Befestigungsschraube, einen Anschlag sowie ein Niederhalteelement umfasst. Zwischen dem Anschlag und dem Niederhalteelement ist eine Druckfeder vorgesehen. Die einzelnen Teile werden vormontiert und dem Anwender als eine Befestigungsvorrichtung zur Verfügung gestellt.

Nachteilig an der bekannten Lösung ist, dass diese Befestigungsanordnung viele Einzelteile umfasst und daher aufwändig in der Herstellung ist. Zudem muss zum Setzen der Befestigungsanordnung diese in die C-förmige Montageschiene eingedreht werden. Da das Niederhalteelement bei Befestigungsanordnungen für Solarpaneele zumeist über 100 mm lang ist, wird dazu ein sehr grosser Abstand zwischen den Solarpaneelen benötigt, welcher jedoch aus Gründen der benötigten Platzverhältnisse auf ein Minimum reduziert werden sollte.

Alternativ könnte das Hintergreifteil gegenüber dem Niederhalteelement drehbar ausgeführt werden, so dass die Befestigungsanordnung auch bei geringen Abständen der Solarpaneele untereinander setzbar ist. Für eine ausreichende Gebrauchstauglichkeit einer solchen Befestigungsanordnung muss das Hintergreifteil zum Setzen mit der Befestigungsschraube ausreichend fest verbunden und zum Verspannen der Befestigungsanordnung von der Befestigungsschraube wieder leicht lösbar sein. Beispielsweise könnte ein Sicherungslack zwischen dem Hintergreifteil und der Befestigungsschraube vorgesehen werden. Das Losbrechmoment muss jedoch gering sein, damit die Befestigungsschraube von Hand angezogen werden kann. Diese unterschiedlichen Erfordernisse können nur mit einem zusätzlichen Montageaufwand bei der Herstellung der Befestigungsanordnung abgedeckt werden.

### Darstellung der Erfindung

Aufgabe der Erfindung ist es, eine Befestigungsvorrichtung für die Befestigung von Solarpaneelen an einer Montageschiene zu schaffen, die einfach zu montieren ist und eine geringe Anzahl von miteinander verbundenen Einzelteilen aufweist.

Die Aufgabe ist durch die Merkmale des unabhängigen Anspruchs gelöst. Vorteilhafte Weiterbildungen sind in den Unteransprüchen dargelegt.

Gemäss der Erfindung umfasst eine Befestigungsvorrichtung für die Befestigung von Solarpaneelen an einer Montageschiene, die eine von Rändern begrenzte Montageöffnung aufweist, ein Niederhalteelement zum Niederhalten der Solarpaneelen, ein Mutterelement zum Verspannen der Befestigungsvorrichtung an der Montageschiene und eine Befestigungsschraube. Die Befestigungsschraube weist ein Angriffsmittel sowie einen davon abragenden Schraubenschaft auf. Durch die Längserstreckung der Befestigungsschraube verläuft eine Längsachse der Befestigungsvorrichtung. Weiter ist ein Verbindungselement vorgesehen, das einen Verbindungsabschnitt und zumindest zwei davon abragende federelastische Abschnitte aufweist, die parallel zu der Längsachse der Befestigungsvorrichtung verlaufen sowie in ihrem freien Endbereich einen Halteabschnitt und einen zu dem Halteabschnitt in Richtung des Verbindungsabschnitts beabstandeten Vorsprung zur Ausbildung eines ersten Aufnahmeraums für die Aufnahme der, die Montageöffnung begrenzenden Ränder aufweisen. Zwischen den federelastischen Abschnitten ist ein Zwischenraum ausgebildet. Die Halteabschnitte und die Vorsprünge sind an der von dem Zwischenraum abgewandten Seite der federelastischen Abschnitte angeordnet. Weiter ist ein Federelement vorgesehen, das sich einerseits an dem Mutterelement und andererseits an dem Niederhalteelement abstützt. Das Mutterelement ist derart an dem Verbindungsabschnitt angeordnet, dass die Befestigungsschraube koaxial in dem Zwischenraum geführt ist.

Die federelastischen Abschnitte sind für die Ausbildung des Zwischenraums vorteilhaft im gleichen Abstand zu der Längsachse der Befestigungsvorrichtung angeordnet. Bei mehr als zwei federelastischen Abschnitten formen diese im Querschnitt beispielsweise eine polygonale oder kreisförmige Ausgestaltung. Durch Zusammendrücken der federelastischen Abschnitte des Verbindungselement lässt sich die Befestigungsvorrichtung in die Montageöffnung einführen, wobei die von den Halteabschnitten und den dazu beabstandeten Vorsprüngen geschaffenen ersten Aufnahmeräume in eine Position zur bereichsweisen Aufnahme der die Montageöffnung begrenzenden Ränder gebracht werden. Für eine einfache Montage dringt im vormontierten Zustand der Befestigungsvorrichtung das freie Ende der Befestigungsschraube nur bereichsweise in den von den federelastischen Abschnitten geschaffenen Zwischenraum ein, so dass sich die federelastischen Abschnitte leicht zusammendrücken lassen. Durch Entlasten der federelastischen Abschnitte streben diese voneinander weg, wobei die Ränder der Montageöffnung von den Halteabschnitten und den dazu beabstandeten Vorsprüngen umgriffen werden. Der von dem Verbindungselement und dem Federelement geschaffene Abstand zwischen der Montageschiene zu einem der Niederhalteabschnitte des Niederhalteelements ist derart gewählt, dass Solarpaneelen mit unterschiedlichen Höhen mit ein und derselben Befestigungsvorrichtung an den Montageschienen fixierbar sind.

Die an der Montageschiene eingeschnappte Befestigungsvorrichtung ist zur Positionierung entlang der Montageöffnung verschiebbar. Anschliessend wird die Befestigungsschraube verspannt, wobei die Höhe des Niederhalteelements zu der Montageschiene entgegen der Federkraft des Federelementes reduziert wird, bis der Niederhalteabschnitt des Niederhalteelementes mit der Oberseite der Solarpaneelen in Anlage kommt. Die Länge der Befestigungsschraube ist derart gewählt, dass im verspannten Zustand der Befestigungsvorrichtung das freie Ende der Befestigungsschraube in die Montageöffnung eindringt. Weiter ist vorteilhaft der Schraubendurchmesser der Befestigungsschraube derart gewählt, dass die federelastischen Abschnitte im Bereich der die Montageöffnung begrenzenden Rändern an diese gepresst werden und ein ungewolltes Lösen der Befestigungsvorrichtung unter Belastung verhindert ist.

Das Niederelement weist vorteilhaft sich parallel in Richtung des Verbindungselementes erstreckende Seitenflächen auf, welche zumindest bis über den Verbindungsabschnitt des Verbindungselementes geführt sind. Beim Verspannen der Befestigungsschraube wird dadurch ein Verdrehen des Verbindungselementes und des Federelementes verhindert.

Die erfindungsgemässe Befestigungsvorrichtung ist leicht montierbar und ist aufgrund der wenigen, einfach fertigbaren Einzelteile kostengünstig herstellbar, was insbesondere bei einem Massenprodukt, wie es eine solche Befestigungsvorrichtung darstellt, ein wesentlicher Vorteil ist.

Vorzugsweise erstreckt sich der Vorsprung unter Ausbildung eines zweiten Aufnahmeraums für einen Abschnitt des Schraubenschafts der Befestigungsschraube in Richtung des Verbindungsabschnitts. Vorteilhaft dringt die Befestigungsschraube in der Vormontagestellung der Befestigungsvorrichtung maximal bis zur axialen Position der Vorsprünge bezogen auf die Längsachse der Befestigungsvorrichtung in den von den federelastischen Abschnitten gebildeten Zwischenraum ein, so dass das freie Ende der Befestigungsschraube beim Zusammendrücken der federelastischen Abschnitte von diesen bereichsweise umfasst wird, und somit die Verschwenkbarkeit der federelastischen Abschnitte nur im gewünschten Rahmen einschränkt.

Bevorzugt sind Einführabschnitte an den freien Enden der federelastischen Abschnitte vorgesehen, die einander zugewandt von den Halteabschnitten abragen. Die Einführabschnitte bilden vorteilhaft eine konische Spitze als Einführhilfe beim Setzen der Befestigungsvorrichtung aus, so dass die Befestigungsvorrichtung im Vormontagezustand lediglich in die Montageöffnung eingeclipst werden muss, wobei die federelastischen Abschnitte zusammengedrückt werden und nach dem Erreichen der Position zum Umgreifen der Ränder der Montageöffnung diese umgreifen. In dieser Ausgestaltung der erfindungsgemässen Befestigungsvorrichtung ist durch den Einclipsvorgang eine einfache Montage gewährleistet, wobei sämtliche Vorgänge von aussen her erfolgen und beispielsweise nicht zwischen zwei benachbarten Solarpaneelen für deren Fixierung gegriffen werden muss. Alternativ können die Einführabschnitte zur Ausbildung der Einführhilfe für die Befestigungsvorrichtung beispielsweise auch eine ballige Aussenkontur aufweisen.

Vorzugsweise ist das Verbindungselement im Wesentlichen U-förmig ausgebildet, wobei die federelastischen Abschnitte die Schenkel des U-förmigen Verbindungselementes ausbilden. Dieses Verbindungselement ist besonders einfach herstellbar.

Bevorzugt ist das Federelement als Blattfeder ausgebildet. In einer vorteilhaften Ausführungsform kommen dabei die freien Ränder der Blattfeder mit dem Niederhalteelement in Anlage und ein Mittelabschnitt der Blattfeder stützt sich an dem Mutterelement ab, wobei der Mittelabschnitt eine Durchführöffnung für die Befestigungsschraube aufweist. Das Federelement ist an dem Mutterelement gehalten. In einer weiteren vorteilhaften Ausführungsform ist das Federelement an dem Mutterelement lediglich festgelegt. Mit dem Federelement wird in der Vormontagestellung der Befestigungsvorrichtung ein ausreichender Abstand des Niederhalteabschnitts zu der Montageschiene sichergestellt, damit mit der Befestigungsvorrichtung Solarpaneelen mit unterschiedlichen Höhen an der Montageschiene festlegbar sind.

In einer Alternative dazu ist das Federelement als Druckfeder ausgebildet. Die Druckfeder stützt sich entweder an dem Mutterelement ab oder wird von diesem gehalten beziehungsweise ist an diesem festgelegt.

Um auch bei einer Befestigungsvorrichtung mit einer Druckfeder als Federelement ein Verdrehen des Verbindungselementes beim Verspannen der Befestigungsvorrichtung sicher zu stellen, ist vorzugsweise ein Blechabschnitt als Verdrehsicherung an dem Mutterelement vorgesehen, der sich vorteilhaft zwischen den Seitenflächen des Niederhalteelementes erstreckt.

Die Befestigungsvorrichtung ist der Witterung ausgesetzt und wird deshalb vorteilhaft aus Aluminium und rostfreien Materialiengefertigt. Soweit als möglich werden sämtliche Teile in einem Stanz-/Biegeverfahren hergestellt, was eine kostengünstige Fertigung der Befestigungsvorrichtung ermöglicht. Zum Ausformen der Vorsprünge in den federelastischen Abschnitten des Verbindungselementes wird beispielsweise ein T-Schnitt erstellt und anschliessend die beiden Flanken nach aussen gebogen. Dadurch entsteht eine gerade Auflagekante, die im gesetzten Zustand der Befestigungsvorrichtung, mit der Montageschiene in Anlage kommt. Dieses Verfahren ist auch bei schwer bearbeitbaren Materialien anwendbar.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand zweier Ausführungsbeispiele näher erläutert. Es zeigen:
- Fig. 1: Einen Schnitt durch ein erstes Ausführungsbeispiel einer erfindungsgemässen Befestigungsvorrichtung entlang der Linie I-I in Fig. 3;
- Fig. 2a-c: den Montagevorgang in drei Einzelschritten in Schnittdarstellung;
- Fig. 3: die erfindungsgemässe Befestigungsvorrichtung in Seitenansicht; und
- Fig. 4: ein zweites Ausführungsbeispiel der erfindungsgemässen Befestigungsvorrichtung in Schnittdarstellung.

Grundsätzlich sind in den Figuren gleiche Teile mit den gleichen Bezugszeichen versehen.

### Wege zur Ausführung der Erfindung

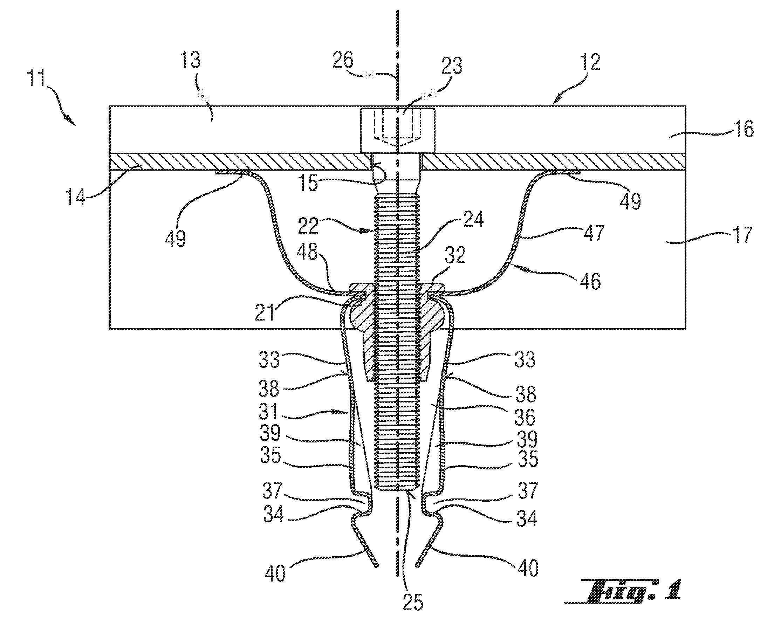

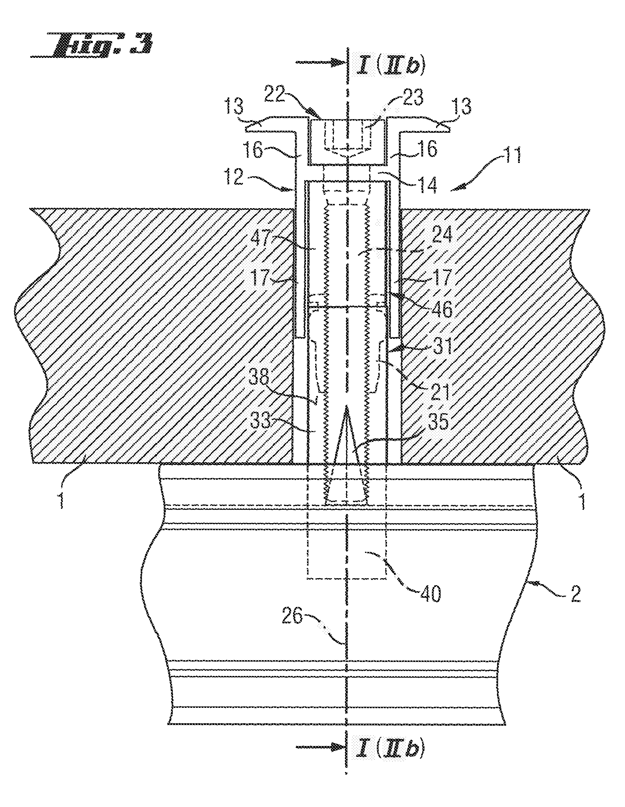

Mit der in den Fig. 1 bis 3 dargestellten Befestigungsvorrichtung 11 werden Solarpaneelen 1 an einer Montageschiene 2 befestigt, die eine von Rändern 4 begrenzte Montageöffnung 3 aufweist. Die Befestigungsvorrichtung 11 umfasst ein Niederhalteelement 12 zum Niederhalten der Solarpaneelen 1, ein Gewindeniet als Mutterelement 21 zum Verspannen der Befestigungsvorrichtung 11 an der Montageschiene 2 und eine Befestigungsschraube 22.

Die Befestigungsschraube 22 weist als Angriffsmittel 23 einen Innensechskant sowie einen Schraubenschaft 24 auf, der von seinem freien Ende 25 ausgehend zumindest bereichsweise mit einem Aussengewinde versehen ist. Durch die Längserstreckung der Befestigungsschraube 22 verläuft eine Längsachse 26 der Befestigungsvorrichtung 11.

Das Niederhalteelement 12 weist zwei einander gegenüberliegende Niederhalteabschnitte 13, die im verspannten Zustand der Befestigungsvorrichtung 11 mit den Solarpaneelen 1 in Anlage kommen, einen Distanzabschnitt 14, der mit einer Durchführöffnung 15 für die Befestigungsschraube 22 versehen ist, sowie jeweils den Distanzabschnitt 14 mit den Niederhalteabschnitten 13 verbindende Abschnitte 16 auf. Weiter ist das Niederhalteelement 12 mit zwei parallel zueinander ausgerichteten Seitenwänden 17 versehen, die sich an der von den Niederhalteabschnitten 13 abgewandten Seite des Distanzabschnitts 14 erstrecken.

Die Befestigungsvorrichtung 11 weist weiter ein aus einem Federstahl in einem Stanz-/Biegeverfahren gefertigtes, im Wesentlichen U-förmiges Verbindungselement 31 auf, das einen Verbindungsabschnitt 32 und zwei davon abragende federelastische Abschnitte 33 aufweist, die im entspannten Zustand des Verbindungselementes 31 im Wesentlichen parallel zu der Längsachse 26 der Befestigungsvorrichtung 11 verlaufen. Zwischen den federelastischen Abschnitten 33 ist ein Zwischenraum 36 ausgebildet. An ihrem Endbereich weisen die federelastischen Abschnitte 33 einen ersten Aufnahmeraum 37 zur bereichsweisen Aufnahme der Ränder 4 der Montageöffnung 3 auf, der durch einen Halteabschnitt 34 und einen zum Halteabschnitt 34 in Richtung des Verbindungsabschnitts 32 beabstandeten Vorsprung 35 ausgebildet wird. Der Halteabschnitt 34 und der Vorsprung 35 sind an der von dem Zwischenraum 36 abgewandten Seite 38 der federelastischen Abschnitte 33 angeordnet. Der Vorsprung 35 erstreckt sich in Richtung des Verbindungsabschnitts 32 und bildet dabei einen zweiten Aufnahmeraum 39 für einen Abschnitt des Schraubenschafts 24 der Befestigungsschraube 22, der sich vom freien Ende 25 des Schraubenschafts 24 erstreckt. Die freie Kante der Vorsprünge 35 schafft eine ausreichende Auflagefläche von dem Verbindungselement 31 an der Aussenseite 5 der Montageschiene 2. An den freien Enden der federelastischen Abschnitte sind Einführabschnitte 40 vorgesehen, die einander zugewandt von den Halteabschnitten 34 abragen und eine konische Spitze als Einführhilfe für die Befestigungsvorrichtung 11 ausbilden.

Weiter weist die Befestigungsvorrichtung 11 eine Blattfeder 47 als Federelement 46 auf, die sich einerseits mit einem Mittelabschnitt 48, der an dem Mutterelement 21 festgelegt ist, an dem Mutterelement 21 und andererseits mit den freien Enden 49 der Blattfeder 47 an dem Distanzabschnitt 14 des Niederhalteelements 12 abstützt.

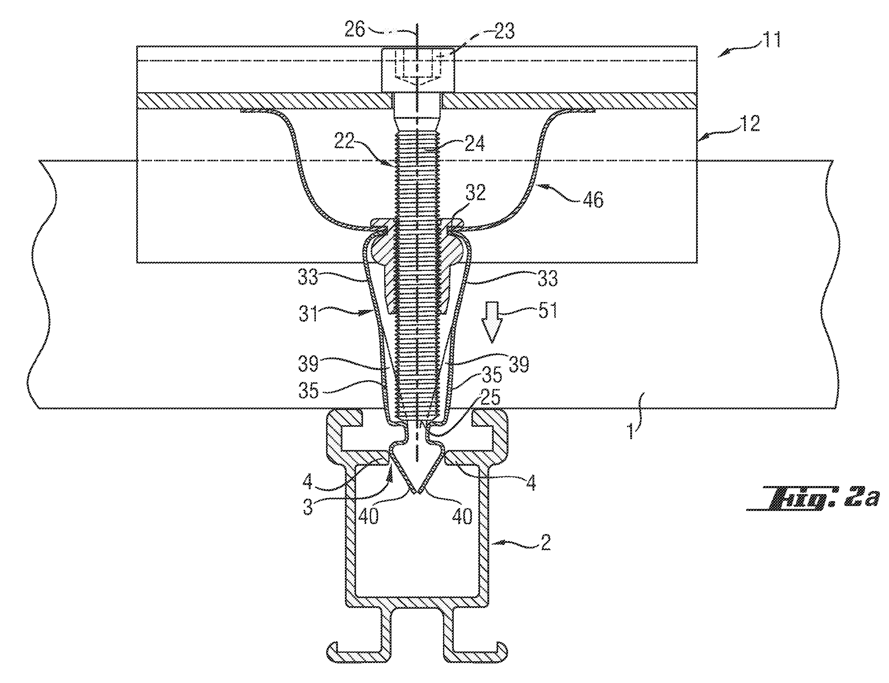

Nachfolgend wird mit Bezug auf die Fig. 2a bis 2c der Montagevorgang zur Befestigung von Solarpaneelen 1 an der Montageschiene 2 mit der Befestigungsvorrichtung 11 beschrieben. Die Solarpaneelen 1 werden im mit einem Abstand zueinander auf ein mit den Montageschienen 2 erstellten Raster verlegt. Anschliessend wird die Befestigungsvorrichtung 11 zwischen zwei Solarpaneelen 1 in Richtung des Pfeils 51 eingeführt (Fig. 2a). Sobald die Einführabschnitte 40 mit den Rändern 4 der Montageöffnung 3 in der Montageschiene 2 in Anlage kommen, werden die federelastischen Abschnitte 33 des Verbindungselementes 31 zusammengedrückt, wobei das freie Ende 25 der Befestigungsschraube 22 in den zweiten, von den Vorsprüngen 35, die sich in Richtung des Verbindungsabschnitts 32 erstrecken, gebildeten Aufnahmeraum 39 aufgenommen wird.

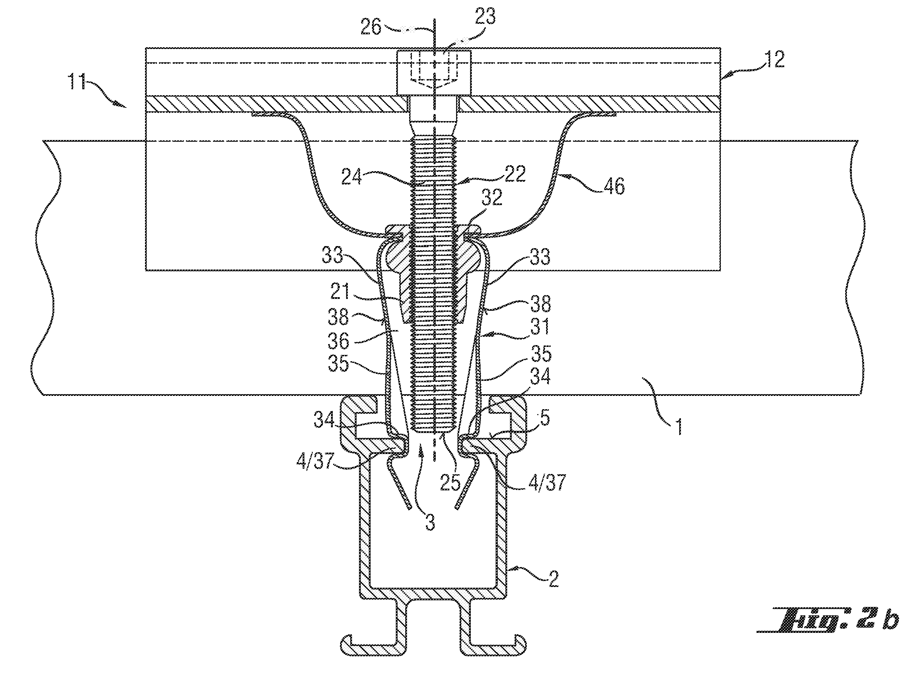

Sobald die Vorsprünge 35 mit der Aussenseite 5 im Bereich der Montageöffnung 3 in Anlage kommen, schnappt das Verbindungselement 31 ein und die Ränder 4 der Montageöffnung 3 werden von den ersten Aufnahmeräumen 37 aufgenommen (Fig. 2b), womit die Befestigungsvorrichtung 11 entlang der Montageöffnung 3 verschiebbar an der Montageschiene 2 gehalten ist.

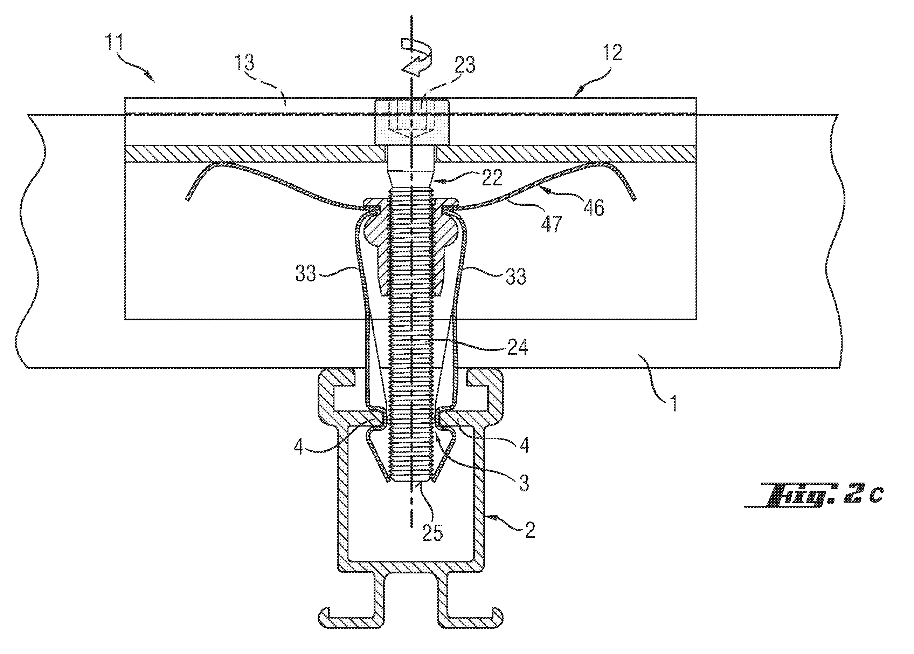

Befindet sich die Befestigungsvorrichtung 11 in der gewünschten, ausgerichteten Position, wird durch Betätigen der Befestigungsschraube 22 die Befestigungsvorrichtung 11 mit der Montageschiene 2 verspannt (Fig. 2c). Dabei wird das Niederhalteelement 12 entgegen der Federkraft der Blattfeder 47 in Richtung der Montageschiene 2 bewegt, bis die Niederhalteabschnitte 13 des Niederhalteelementes 12 mit den Solarpaneelen in Anlage kommen. Das freie Ende 25 des Schraubenschafts 24 dringt beim Verspannen zwischen den federelastischen Abschnitten 33 in die Montageöffnung 3 ein, wobei die federelastischen Abschnitte 33 gegen die Ränder 4 der Montageöffnung 3 gepresst werden. Die Solarpaneelen 1 sind mit der erfindungsgemässen Befestigungsvorrichtung 11 gegen Zug- und Druckbelastung an der Montageschiene 2 fixiert.

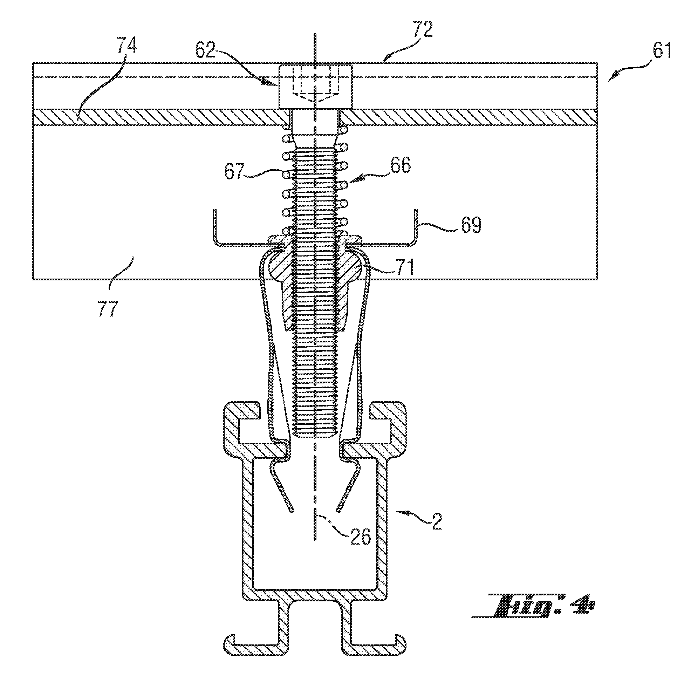

Die in Fig. 4 dargestellte Befestigungsvorrichtung 61 unterscheidet sich von der Befestigungsvorrichtung 11 insbesondere durch die Ausgestaltung des Federelementes 66. Das Federelement 66 ist als Druckfeder 67 ausgebildet, die sich einerseits an dem Mutterelement 71 und andererseits an dem Distanzabschnitt 74 des Niederhalteelementes 72 abstützt. Die Befestigungsschraube 62 ist durch die Druckfeder 67 hindurchgeführt. Als Verdrehsicherung ist an dem Mutterelement 71 ein Blechabschnitt 69 mit abgewinkelten Rändern zwischen den Seitenwänden 77 des Niederhalteelementes 72 vorgesehen.

## Patentansprüche

1. Befestigungsvorrichtung für die Befestigung von Solarpaneelen (1) an einer Montageschiene (2), die eine von Rändern (4) begrenzte Montageöffnung (3) aufweist, mit einem Niederhalteelement (12; 72) zum Niederhalten der Solarpaneelen (1), mit einem Mutterelement (21; 71) zum Verspannen der Befestigungsvorrichtung (11) an der Montageschiene (3) und mit einer Befestigungsschraube (22; 62), die ein Angriffsmittel (23) sowie einen davon abragenden Schraubenschaft (24) aufweist und durch deren Längserstreckung eine Längsachse (26) der Befestigungsvorrichtung (11) verläuft, **dadurch gekennzeichnet, dass** ein Verbindungselement (31) vorgesehen ist, das einen Verbindungsabschnitt (32) und zumindest zwei davon abragende federelastische Abschnitte (33) aufweist, die parallel zu der Längsachse (26) der Befestigungsvorrichtung (11) verlaufen sowie in ihrem freien Endbereich einen Halteabschnitt (34) und einen zu dem Halteabschnitt (34) in Richtung des Verbindungsabschnitts (32) beabstandeten Vorsprung (35) zur Ausbildung eines ersten Aufnahmeraums (37) für die Aufnahme der, die Montageöffnung (3) begrenzenden Ränder (4) aufweisen, wobei zwischen den federelastischen Abschnitten (33) ein Zwischenraum (36) ausgebildet ist sowie die Halteabschnitte (34) und die Vorsprünge (35) an der von dem Zwischenraum (36) abgewandten Seite (38) der federelastischen Abschnitte (33) angeordnet sind, und dass ein Federelement (46; 66) vorgesehen ist, das sich einerseits an dem Mutterelement (21; 71) und andererseits an dem Niederhalteelement (12; 72) abstützt, und wobei das Mutterelement (21; 71) an dem Verbindungsabschnitt (32) derart angeordnet ist, dass die Befestigungsschraube (22; 62) koaxial in dem Zwischenraum (36) geführt ist.

2. Befestigungsvorrichtung nach Anspruch 1, **dadurch gekennzeichnet, dass** der Vorsprung (35) sich unter Ausbildung eines zweiten Aufnahmeraums (39) für einen Abschnitt des Schraubenschafts (24) der Befestigungsschraube (22; 62) in Richtung des Verbindungsabschnitts (32) erstreckt.

3. Befestigungsvorrichtung nach Anspruch 1 oder 2, **dadurch gekennzeichnet, dass** Einführabschnitte (40) an den freien Enden der federelastischen Abschnitte (33) vorgesehen sind, die einander zugewandt von den Halteabschnitten (34) abragen.

4. Befestigungsvorrichtung nach einem der Ansprüche 1 bis 3, **dadurch gekennzeichnet, dass** das Verbindungselement (31) im Wesentlichen U-förmig ausgebildet ist.

5. Befestigungsvorrichtung nach einem der Ansprüche 1 bis 4, **dadurch gekennzeichnet, dass** das Federelement (46) als Blattfeder (47) ausgebildet und optional an dem Mutterelement (21) festgelegt ist.

6. Befestigungsvorrichtung nach einem der Ansprüche 1 bis 4, **dadurch gekennzeichnet, dass** das Federelement (66) als Druckfeder (67) ausgebildet ist.

7. Befestigungsvorrichtung nach Anspruch 6, **dadurch gekennzeichnet, dass** ein Blechabschnitt (69) als Verdrehsicherung für die Befestigungsvorrichtung (61) an dem Mutterelement (71) vorgesehen ist.
